# EUROPEAN PATENT APPLICATION

(11) **EP 3 604 754 A1**
(43) Date of publication of application: **05.02.2020**
(21) Application number: 18777525.9
(22) Date of filing: 13.03.2018
(51) Int. Cl.: F01N 3/24, B01D 53/94, F01N 3/08

(54) **REACTOR**

(30) Priority: 31.03.2017 JP 2017070920
(71) Applicant: Hino Motors, Ltd., Hino-shi, Tokyo 191-8660 (JP)
(72) Inventor: MAYUMI, Masahiko, Hino-shi Tokyo 191-8660 (JP); TSURUTA, Tomoyuki, Hino-shi Tokyo 191-0003 (JP)
(74) Representative: Louis Pöhlau Lohrentz
(86) International application number: PCT/JP2018/009695
(87) International publication number: WO 2018/180459

(57) **Abstract**

Disclosed is a reactor 8 located in a gas gathering chamber 7A (flow change portion) through which exhaust gas 1 in an exhaust system flows curvedly; urea water 10 (addition agent) sprayed from upstream is impinged against the reactor 8 to facilitate gasification through heat receiving. Provided are rectification vanes 12 arrayed in a direction substantially bisecting an angle formed by inflow and outflow directions (see arrows x and y) of the exhaust gas 1 and a support 13 supporting the vanes 12 and received in the gas gathering chamber 7A. The vanes 12 are supported by the support 13 in a spaced-apart relationship from a flow passage wall of the gas gathering chamber 7A.

## Description

### Technical Field

The present invention relates to a reactor against which an addition agent sprayed from upstream is impinged for facilitated gasification thereof through heat receiving.

### Background Art

Conventionally, some diesel engines have a selective reduction catalyst incorporated in an exhaust pipe through which exhaust gas flows and having a property of selectively reacting NOₓ (nitrogen oxides) with a reducing agent even in the presence of oxygen. A required amount of reducing agent is added upstream of the selective reduction catalyst and is reductively reacted on the catalyst with NOₓ in the exhaust gas to thereby reduce a concentration of NOₓ discharged.

Meanwhile, effectiveness of ammonia (NH₃) used as a reducing agent for reduction and purification of NOₓ is well known in a field of industrial flue gas denitration in a plant or the like. However, in a field of automobile where safety is hard to assure as to running with ammonia itself being loaded, it has been proposed to use urea water as a reducing agent.

Specifically, the urea water added into the exhaust gas upstream of the selective reduction catalyst is hydrolyzed into ammonia and carbon dioxide gas according to the following formula to satisfactorily depurate NOₓ in the exhaust gas through reduction on the catalyst by the ammonia.

(NH₂)₂CO + H₂O → 2NH₃ + CO₂

For effectively facilitated transformation of the urea water into ammonia, it is necessary to positively facilitate gasification of the urea water to proceed with substantive chemical reaction for ammonia production. It has been suggested by some of inventors in the present invention (see below-mentioned Patent Literature 1) that, as shown in Fig. 1, a reactor d is located in a bent portion b (flow change portion where exhaust gas c flows curvedly) halfway in an exhaust pipe a; urea water f is sprayed from upstream by an injector e against the reactor d to impinge the sprayed urea water f on rectification vanes g of the reactor d for facilitated gasification thereof through heat receiving.

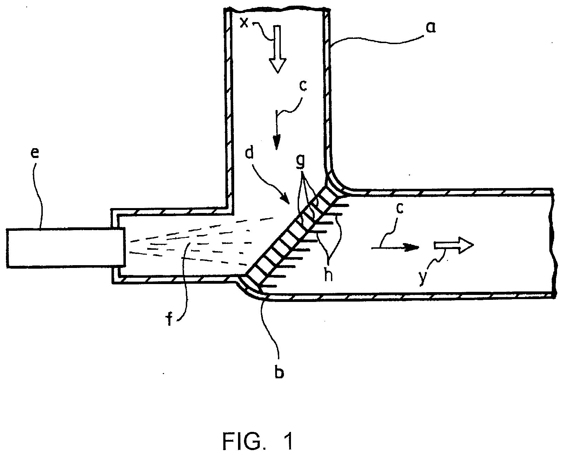

Specifically, employed is a structure such that the rectification vanes g are arrayed in a direction substantially bisecting an angle formed by inflow and outflow directions of the exhaust gas c flowing from upstream of and out downstream of the bent portion b (see arrows x and y in Fig. 1), respectively.

Each of the rectification vanes g is mounted to take a mounted posture along the flow of the exhaust gas c flowing curvedly in the bent portion b and has a downstream fin h which guides the flow of the exhaust gas c to the outflow direction from the bent portion b to afford a rectification effect to the exhaust gas c flowing curvedly in the bent portion b.

### Citation List

### Patent Literature

Patent Literature 1: JP 2015-218687A

### Summary of Invention

### Technical Problems

However, such a conventional proposal merely conceptually explains an arrayed condition and mounted postures of the rectification vanes g and has no technically specific disclosure on how to support the rectification vanes g. If the rectification vanes g are fixed to a flow passage wall of the bent portion b simply by welding or the like, a following phenomenon tends to take place; heat of the rectification vanes heated due to exposure thereof to the flow of the exhaust gas is continuously conducted to the flow passage wall of the bent portion b and thus is emitted to outside air. It is feared that such a useless heat emittance causes reduction in temperature of the rectification vanes g, resulting in failure of on-target facilitated gasification of urea water f.

Such continuous heat conduction of the rectification vanes g to the flow passage wall of the bent portion b and resultant heat emission to the outside air may lower the temperature of the exhaust gas c passing therethrough due to the useless heat emission. Thus, the selective reduction catalyst arranged downstream so as to reduce and purify NOₓ by use of ammonia transformed from the urea water f may be lowered in activity, leading to lowering of exhaust purification performance.

The invention was made in view of the above and has its object to provide a reactor which can prevent a phenomenon of heat of the rectification vanes heated by exposure thereof to the flow of the exhaust gas being continuously conducted to the flow passage wall of the flow change portion and thus being emitted to the outside air.

### Solution to Problems

The invention is directed to a reactor located in a flow change portion through which exhaust gas in an exhaust system flows curvedly, an addition agent sprayed from upstream of said flow change portion being impinged against the reactor to facilitate gasification thereof through heat receiving, characterized in that it comprises a plurality of rectification vanes arrayed in a direction substantially bisecting an angle formed by inflow and outflow directions of the exhaust gas to and from said flow change portion and a support which supports each of said rectification vanes and is received in said flow change portion, said rectification vanes being supported by said support in a spaced-apart relationship from a flow passage wall of said flow change portion.

Then, to support the rectification vanes by the support in the spaced-apart relationship from the flow passage wall of the flow change portion shuts off direct heat conduction from the vanes to the flow passage wall of the flow change portion to thereby prevent the phenomenon of heat of the rectification vanes heated by exposure thereof to the flow of the exhaust gas being continuously conducted to the flow passage wall of the flow change portion and thus being emitted to the outside air. As a result, the rectification vanes are efficiently heated by heat of the exhaust gas and are satisfactorily maintained in a high temperature condition, whereby gasification of the addition agent sprayed and impinged from upstream is effectively facilitated while preventing the exhaust gas from being lowered in temperature by useless heat emittance.

Further, in embodying the invention, it is preferable that the support comprises a pair of opposite side walls for supporting opposite ends of each of the rectification vanes, respectively, a rear wall for interconnecting said opposite side walls downstream of said rectification vanes to provide a shielding face to the inflow direction of the exhaust gas and a fixing ring provided downstream of the opposite side and rear walls and integrally continuous therewith, said fixing ring being cylindrical in the outflow direction from the flow change portion and fitted into the flow passage wall of said flow change portion, an isolation space being secured between said opposite side and rear walls and the flow passage wall of said flow change portion.

### Advantageous Effects of Invention

The reactor of the invention as mentioned in the above can exhibit various excellent effects. Direct heat conduction from the rectification vanes to the flow passage wall of the flow change portion can be shut off to prevent the phenomenon of heat of the rectification vanes heated by exposure thereof to the flow of the exhaust gas being continuously conducted to the flow passage wall of the flow change portion and thus being emitted to the outside air. Thus, the rectification vanes can be effectively heated by the heat of the exhaust gas and satisfactorily maintained in the high temperature state, so that gasification of the addition agent sprayed and impinged from upstream can be effectively facilitated to reduce an amount of the addition agent to be added more than ever; lowering of the exhaust gas in temperature due to useless heat emission can be prevented to enhance activity of an aftertreatment device arranged downstream so as to purify the exhaust gas by use of the gasified addition agent, thereby enhancing exhaust purification performance.

### Brief Description of Drawings

Fig. 1 is a sectional view conceptually showing a conventional example;
Fig. 2 is a schematic diagram showing an embodiment of the invention;
Fig. 3 is a view looking in a direction of arrows III in Fig. 2;
Fig. 4 is a view looking in a direction of arrows IV in Fig. 3;
Fig. 5 is a perspective view showing details of the reactor shown in Fig. 4; and
Fig. 6 is a perspective view of the reactor shown in Fig. 4 looking in an inflow direction of exhaust gas.

### Description of Embodiment

An embodiment of the invention will be described in conjunction with drawings.

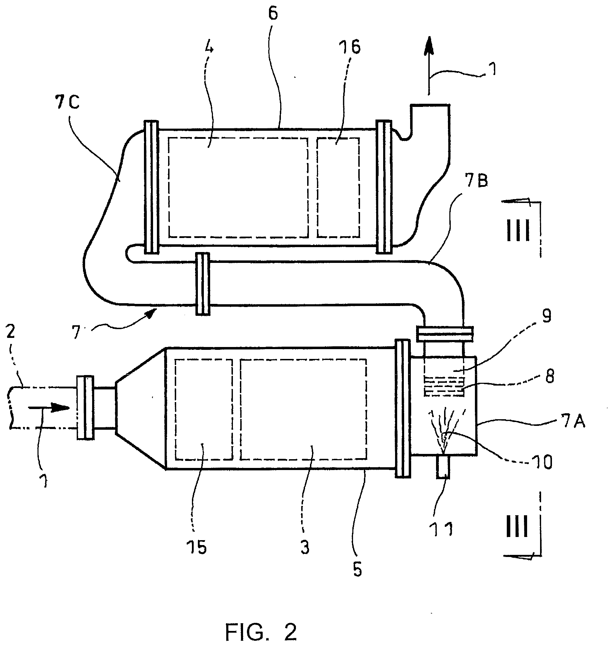

Fig. 2 shows the embodiment of the invention applied to an exhaust emission control device detailed hereinafter. More specifically, in the exhaust emission control device to which the embodiment is applied, incorporated in an exhaust pipe 2 through which exhaust gas 1 from an engine flows and housed in casings 5 and 6 in parallel with each other are a particulate filer 3 for capturing particulates in the exhaust gas 1 and a selective reduction catalyst 4 downstream of the particulate filter 3 and having a property of selectively reacting NOₓ with ammonia even in the presence of oxygen, a communication passage 7 being provided to oppositely turn the exhaust gas 1 discharged from an exit side of the particulate filter 3 into an entry side of the adjacent selective reduction catalyst 4, a reactor 8 being applied to and arranged in a flow change portion most upstream in the communication passage 7.

Specifically, the communication passage 7 is an S-shaped structure comprising a gas gathering chamber 7A which encircles an exit end of the particulate filter 3 to gather the exhaust gas 1 discharged therefrom through substantially perpendicular turnabout of the gas, a communication pipe 7B which extracts the exhaust gas 1 gathered in the gas gathering chamber 7A from an exhaust outlet 9 into the entry side of the selective reduction catalyst 4 and a gas dispersion chamber 7c which encircles the entry side of the selective reduction catalyst 4 to disperse the exhaust gas 1 guided by the communication pipe 7B through substantially perpendicular turnabout of the gas into the entry side of the selective reduction catalyst 4.

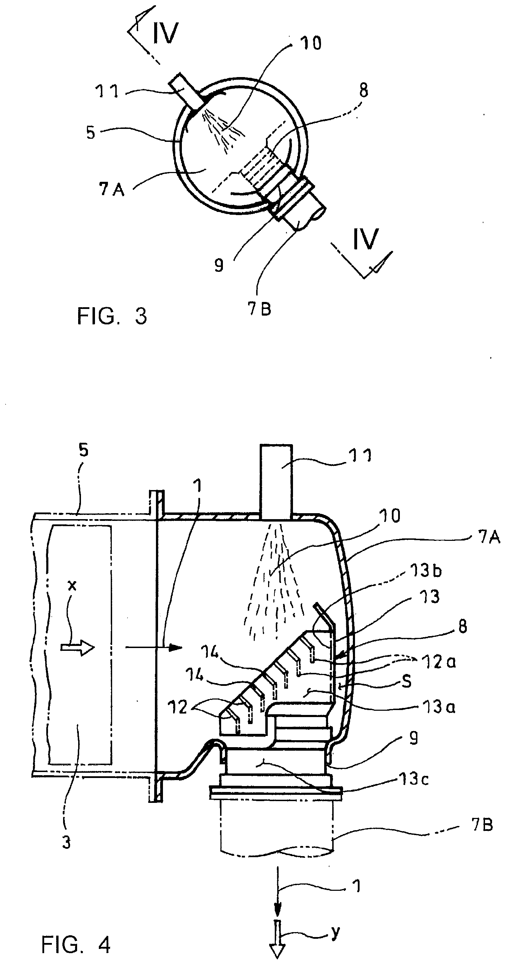

As shown in Fig. 3, the exhaust outlet 9 of the gas gathering chamber 7A is opened directed slantly downward in an anglarily deviated manner from a direct downward direction of the gas gathering chamber 7A toward the selective reduction catalyst 4. An injector 11 is attached to the gas gathering chamber 7A on a slantly upward position opposed to the exhaust outlet 9 such that urea water 10 may be injected to the exhaust outlet 9. The exhaust outlet 9 of the gas gathering chamber 7A is provided with a reactor 8 against which the urea water 10 sprayed by the injector 11 is impinged for facilitated gasification thereof.

Here, as shown in Fig. 4, the gas gathering chamber 7A which is most upstream in the communication passage 7 is the flow change portion (where the exhaust gas 1 flows curvedly) to which the reactor 8 in the embodiment is applied. The reactor 8 comprises a plurality of rectification vanes 12 arrayed in a direction substantially bisecting an angle formed by inflow and outflow directions (see arrows x and y in Fig. 4) of the exhaust gas 1 into and from the gas gathering chamber 7A and a support 13 which supports opposite ends of each of the rectification vanes 12 and is received in the gas gathering chamber 7A. The rectification vanes 12 is supported by the support 13 in a spaced-apart relationship from the flow passage wall of the gas gathering chamber 7A as detailed hereinafter.

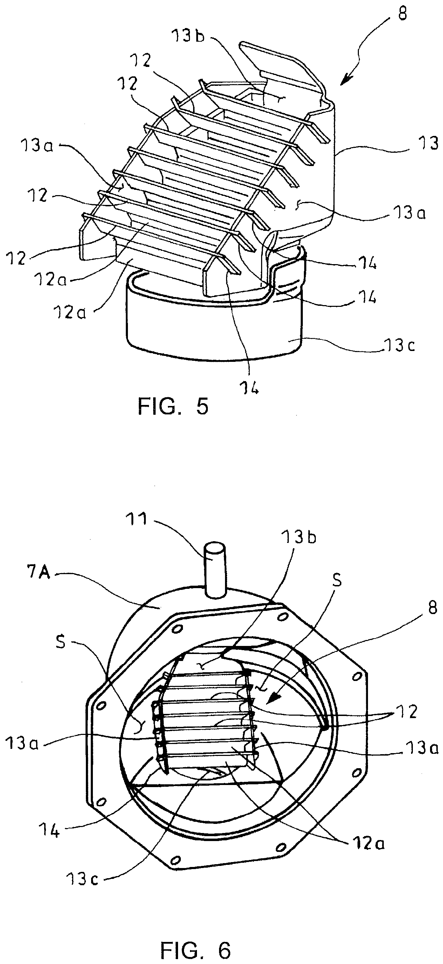

Specifically as shown in Fig. 5, the support 13 has a pair of opposite side walls 13a each providing a slanting side in the arrayed direction of the rectification vanes 12. A plurality of slots 14 are formed on each of the slanting sides of the opposite side walls 13a. Opposite ends of each of the rectification vanes 12 are inserted from upstream into the slots 14 to provide an installed state; the rectification vanes 12 in the installed state are adapted to provide mounted postures (postures with less pressure loss set by flow analysis of the exhaust gas 1) along the flow of the exhaust gas 1; moreover, especially in the embodiment, each of the rectification vanes 12 except opposite ends thereof has a downstream fin 12a which guides the flow of the exhaust gas 1 to outflow direction from the gas gathering chamber 7A.

The opposite side walls 13a are interconnected through a rear wall 13b which provides a shield face to the inflow direction of the exhaust gas 1 downstream of the rectification vanes 12. Provided downstream of the opposite side and rear walls 13a and 13b and integrally continuous therewith is a fixing ring 13c which is cylindrical in the outflow direction of the gas gathering chamber 7A and is fitted into a flow passage wall at the exhaust outlet 9 of the gas gathering chamber 7A.

An isolation space S (see Figs. 4 and 6) is secured between the opposite side and rear walls 13a and 13b and the flow passage wall of the gas gathering chamber 7. By the intermediation of the isolation space S, the rectification vanes 12 are supported in a spaced-apart relationship from the flow passage wall of the gas gathering chamber 7A.

In the exhaust emission control device illustrated in Fig. 2, arranged in the casing 5 upstream of the particulate filter 3 is an oxidation catalyst 15 for oxidization treatment of unburned fuel components in the exhaust gas 1, and arranged in the casting 6 downstream of the selective reduction catalyst 4 is an ammonia reducing catalyst 16 for oxidization treatment of surplus ammonia.

With the reactor 8 thus constructed, the rectification vanes 12 are supported by the opposite side walls 13a of the support 13 in the spaced-apart relationship through the isolation space S from the flow passage wall of the gas gathering chamber 7A, so that direct heat conduction from the rectification vanes 12 to the flow passage wall of the gas gathering chamber 7A is shut off to prevent the phenomenon of heat of the rectification vanes 12 heated by exposure thereof to the flow of the exhaust gas 1 being continuously conducted to the flow passage wall of the gas gathering chamber 7A and being emitted to the outside air; the rectification vanes 12 are effectively heated by heat of the exhaust gas 1 and are satisfactorily maintained in a high temperature state, so that gasification of the urea water 10 sprayed and impinged from upstream is effectively facilitated while lowering of the exhaust gas 1 in temperature due to useless heat emission can be prevented.

Thus, according to the above embodiment, direct heat conduction from the rectification vanes 12 to the flow passage wall of the gas gathering chamber 7A can be shut off to prevent the phenomenon of the heat of the rectification vanes heated by exposure thereof to the flow of the exhaust gas 1 being continuously conducted to the flow passage wall of the gas gathering chamber 7A and being emitted to outside air; the rectification vanes 12 can be effectively heated by heat of the exhaust gas 1 and maintained in a high temperature state; gasification of the urea water 10 sprayed and impinged from upstream can be effectively facilitated to reduce an amount of the urea water 10 to be added more than ever; moreover, lowering of the exhaust gas 1 in temperature due to useless heat emission can be prevented to enhance activity of an aftertreatment device arranged downstream; activity of the selective reduction catalyst 4 arranged downstream can be enhanced to enhance exhaust purification performance.

It is to be understood that a reactor according to the invention is not limited to the above embodiment and that various changes and modifications may be made without departing from the scope of the invention. For example, the description has been made in the embodiment using Figs. 2-6 in a case where the addition agent is urea water; alternatively, the addition agent may be fuel, provided that the selective reduction catalyst has a property of selectively reacting NOₓ with HC gas even in the presence of oxygen. The addition agent is not limited to that added as reducing agent upstream of the selective reduction catalyst; the invention may be applied to various addition agents which require gasification.

### Reference Signs List

- 1: exhaust gas
- 7A: gas gathering chamber (flow change portion)
- 8: reactor
- 10: urea water (addition agent)
- 12: rectification vanes
- 13: support
- 13a: opposite side wall
- 13b: rear wall
- 13c: fixing ring
- S: isolation space

## Claims

1. A reactor located in a flow change portion through which exhaust gas in an exhaust system flows curvedly, an addition agent sprayed from upstream of said flow change portion being impinged against the reactor to facilitate gasification thereof through heat receiving, wherein said reactor comprises a plurality of rectification vanes arrayed in a direction substantially bisecting an angle formed by inflow and outflow directions of the exhaust gas to and from said flow change portion and a support which supports each of said rectification vanes and is received in said flow change portion, said rectification vanes being supported by said support in a spaced-apart relationship from a flow passage wall of said flow change portion.

2. The reactor as claimed in claim 1, wherein the support comprises a pair of opposite side walls for supporting opposite ends of each of the rectification vanes, respectively, a rear wall for interconnecting said opposite side walls downstream of said rectification vanes to provide a shielding face to the inflow direction of the exhaust gas and a fixing ring provided downstream of the opposite side and rear walls and integrally continuous therewith, said fixing ring being cylindrical in the outflow direction from the flow change portion and fitted into the flow passage wall of said flow change portion, an isolation space being secured between said opposite side and rear walls and the flow passage wall of said flow change portion.
